# EUROPEAN PATENT SPECIFICATION

(11) **EP 2 356 360 B1**
(45) Date of publication and mention of the grant of the patent: **26.08.2015**
(21) Application number: 09752488.8
(22) Date of filing: 12.11.2009
(51) Int. Cl.: F16K 37/00, F16K 31/06

(54) **SOLENOID VALVE WITH SENSOR FOR DETERMINING STROKE, VELOCITIES AND/OR ACCELERATIONS OF A MOVEABLE CORE OF THE VALVE AS INDICATION OF FAILURE MODUS AND HEALTH STATUS**
MAGNETVENTIL MIT SENSOR ZUR BESTIMMUNG VON HUB, GESCHWINDIGKEITEN UND/ODER BESCHLEUNIGUNGEN EINES BEWEGLICHEN KERNS DES VENTILS ALS ANZEIGE FÜR VERSAGENSMODUS UND GESUNDHEITSSTATUS
ELECTROVANNE COMPORTANT UN CAPTEUR POUR DÉTERMINER LA COURSE, LES VITESSES ET/OU LES ACCÉLÉRATIONS D'UN NOYAU MOBILE DE LA VANNE COMME INDICATEURS D'UN MODE DE DÉFAILLANCE ET D'UN ÉTAT DE SANTÉ

(30) Priority: 14.11.2008 NL 2002209
(43) Date of publication of application: 17.08.2011
(73) Proprietor: ASCO CONTROLS B.V., 3925 BD Scherpenzeel (NL)
(72) Inventor: VAN DER ZEE, Jan, NL-3781 XL Voorthuizen (NL); VAN DE WAERDT, Jorik, Melis, Elbert, NL-3551 ET Utrecht (NL)
(74) Representative: EP&C
(86) International application number: PCT/NL2009/000217
(87) International publication number: WO 2010/056111

(56) References cited:
- DE-A1- 19 739 840
- US-A1- 2003 131 896

## Description

The invention relates to a solenoid valve for the regulation of a medium flow, in particular a so-called balanced 3-way valve. "Balanced" in this context means that the force which is necessary for opening and closing the valve is independent of the medium pressure. The medium pressure can be present on an arbitrary one of the inlet or outlet ports of the valve, without this medium pressure having an influence on the force which is necessary for opening and closing of the valve. Balance is obtained by equally large pressure surfaces of an axially moveable valve element of the valve, the so-called core. The surfaces are each facing the axial moving direction, are oppositely directed and are provided upstream of a closing area of the valve.

From the state of the art numerous variants are known of solenoid valves. See for example US-2,971,090 and US-3,077,207. Each of the herein disclosed solenoid valves comprises a housing with three inlet and outlet ports respectively en between them a core which is moveable in the axial direction in an axial bore of the housing. The core and/or the housing are provided with sealing elements like O-rings. Furthermore, seats are provided against which the sealing elements depending on the position of the core can come to lie sealing against. The core moves up and down when a coil is energized and de-energized in order to release or shut of pressurized medium through the valve. Once the coil is energized a so-called plugnut or static core is magnetized and pulls the moving core to a new position. This could be a limited position at the end of the stroke or, in case of a proportional valve, any position between opened and closed. A spring or other suitable element may be provided for pushing the core back in its original pre-defined position once the coil is de-energized. At the moment when the solenoid valve is in process it is unknown if the valve is actually functioning as it is supposed to be. It remains unknown whether the valve is open or closed and what the performance of the valve is.

Therefore it is also known to provide solenoid valves with a position sensor. See for example US-5,691,813, where a position sensor for monitoring the position of a valve element of a valve is described. The position sensor here comprises reflector means associated with the valve element and arranged to reflect energy, for example visible light, from a suitable source. When the valve element is in a first position the reflected energy is incident upon a detector. Movement of the valve away from this first position results in less or even no reflected light being incident upon the detector. Thus it is possible to provide an indication whether the valve element is in its closed position rather than in its fully open position.

Although this use of a position sensor already gives some kind of indication of the condition of the valve, it still has the disadvantage that this indication always runs one step behind the actual situation. As soon as a user sees that the valve element has not reached its desired end position and thus does not properly close off or open the valve, this is already a malfunctioning of the valve, which may lead to risk full situations and/or damages in the process the valve is steering.

US 2003/0131896 shows another example of a solenoid valve with a position sensor. In addition the valve here comprises a control portion which compares a detection signal from the position sensor with a set value to adjust a degree of valve opening by controlling a drive section on the basis of a deviation of the detection signal from the set value. Thus the control portion is destined for adjusting the opening degree of the valve by performing feedback control. When a displacement of the valve element has not reached the set value, a positive voltage corresponding to the difference therebetween is applied to an exciting coil of the valve, so that a thrust is generated such that the spool displaces in a direction approaching to the set value. On the contrary, when the displacement of the valve element has exceeded the set value, a negative voltage is applied. This is repeated until the set value is reached.

This known valve construction with feedback control also has the disadvantage that it always runs one step behind the actual situation. The feedback control option only helps in accurately closing or opening the valve to a specific degree. It does not help in predicting a malfunctioning of the valve.

Yet another example of a solenoid valve with a position sensor is DE 197 39 840. Here the position signals are converted in time into a speed signal of the valve element. This speed signal is then used to steer the speed of the valve element in such a way that it is reduced to zero as soon as the valve element reaches one of its two end positions. The advantage of this is that wear is reduced, that the valve makes less noise during operation and that less energy is needed for a proper steering of the valve.

The disadvantage here is still that failure behaviour of the valve can not be predicted. The feedback control on the basis of the derived speed signal only helps in smoothening the opening and closure process of the valve element. It does not help in predicting a malfunctioning of the valve.

Applicant sells for some years a balanced 3-way solenoid valve of the direct acting type under the ASCO series 327. This type of solenoid valve for example is used to steer large butterfly valves and ball valves which are used in the process industry and petrochemical industry. These valves need to be absolutely reliable in order to be able to guarantee the end product of the process it helps steering. Because of the varying environmental conditions and process conditions like temperature and medium used, the valves need to cope with high demands and for example be resistant against a large scope of conditions in order to be able to provide reliable sealings under a certain required pressure.

The present invention aims to at least partly overcome the abevementioned disadvantages, or to provide a usable alternative. In particular the invention aims to provide a solenoid valve with which it is possible to predict a possible malfunctioning of the valve at an earlier stage such that it can be foreseen and prevented by proper maintenance.

This aim is achieved by a solenoid valve according to claim 1. With this the valve comprises a housing having an axial bore which is in flow connection with at least one inlet and outlet port. A valve element is moveable to and fro in the axial direction of the bore. An electrical coil for generating a magnetic field is provided for moving the valve element between a first (closed) end position and a second (open) end position. A position sensor is present for detecting axial positions of the valve element inside the bore. According to the invention a control unit is provided for determining stroke, velocities and/or accelerations of the valve element in the axial direction of the bore as a function of the detected axial positions during movements of the valve element between its first and second end positions. The thus determined movement behaviour of the valve element can advantageously be used to give feedback of the performance of the solenoid valve to a user, controller, operator, or the like. The movement behaviour, in particular the maximum stroke the valve element covers during a movement between its two end positions and/or the velocity pattern of the valve element during a movement between its two end positions and/or the acceleration pattern of the valve element during a movement between its two end positions, can be analyzed and provide the user, controller, operator, or the like with information about the health status and failure modus of the valve. This makes the valve safer and more reliable. For example, it may lead to the conclusion that parts of the valve are damaged or are likely to get damaged soon or that movement of the valve is (partially) blocked or is likely to get blocked soon. The determined velocities and/or accelerations can for example say something about the friction of the valve element in the axial bore. Also they can give an indication of the condition of sealing elements of the valve, like O-rings. The maximum stroke can likewise say something about the condition of the sealing elements of the valve, like the O-rings. All in all the invention makes it possible to achieve a higher so-called Safety Integrity Level (SIL) for a solenoid valve. In particular the invention to add diagnostic coverage about the condition of the valve and thus to provide a detection of the unknown chances for future failure in order to be able to anticipate such failure before it is actually happening, makes it possible to achieve a SIL4 instead of a SIL3 classification.

The control unit comprises a memory with a set of references of stroke, velocities and/or accelerations which are indicative for a proper functioning of the valve and for a future malfunctioning of the valve. The control unit can then compare the determined stroke, velocities and/or accelerations with the reference stroke, velocities and/or accelerations, and take appropriate action.This appropriate action includes sending out a feedback signal about failure modus and health status towards a user, controller, operator, or the like. In the case that the determined stroke, velocities and/or accelerations are outside an allowed range of the set of reference stroke, velocities and/ or accelerations the feedback signal may be sent out. For example the solenoid valve can give a signal when the friction gets too high and thus the velocity and/or acceleration gets too low. An opening or closing velocity which is too high or low, may indicate a future failure of a spring of the valve. Another example is that if the valve is opening too slow, it may be an indication of the coil being too weak, for example because of too high temperature. This enlarges the risk of short-circuit. In those cases the valve needs maintenance, in particular that an element of the valve is likely to get damaged soon and needs to be replaced. With the sensor and corresponding electronic system (control unit) the user is able to plan the maintenance and reduce the downtime of a plant for which the solenoid valve according to the invention is used.

Experience based methods, like Failure Mode and Effect analysis and the like, can advantageously be used to fill the memory with a proper set of reference values. Heuristic can help collecting field data to select maintenance strategies. Thus an unknown upcoming failure can be changed into a predicted known failure. The present invention makes it possible to monitor the condition of the valve during its entire life-time. From the field data it may follow that the characteristics of the valve change during its life-time. A valve which has been operated 10,000 times may have different operating behaviour than for example a valve which has been operated 100,000 times. This information can also be used as input for the memory and can be delivered together with the valve to a maintenance system of a plant. The control unit can then be designed such that after a specific number of operations and/or certain life-time, it switches to another set of reference values with which the determined stroke, velocities and/or accelerations as a function of the detected axial positions need to be compared.

In an embodiment, the set of reference values is specifically determined for an individual valve. By measuring a specific valve in the factory it is advantageously possible to determine its characteristic behaviour conditions and use them for choosing a proper set of reference values to fill up the memory of that particular valve with.

The stroke, velocities and/or accelerations may be monitored directly. Preferably however the control unit comprises a timer for measuring time as a function of the detected axial positions of the valve element during a movement starting at its first towards its second end position or vice versa. The control unit is then designed for determining the velocities and/or accelerations by differentiating the detected positions against the measured time. By detecting the position (y) of the valve element as a function of the time (t), the velocity (y' = v) and/or acceleration (y" = a) can be obtained by differentiation (one time for velocity and two times for acceleration). This construction with the timer is a simple and cheap solution. It has the advantage that the position sensor is used efficiently, not only to give position indications, but indirectly also to give the desired velocity and/or acceleration patterns.

The detection of the positions as a function in time preferably is performed continuously such that velocity patterns and/or acceleration patterns are obtained over the entire movement range of the valve element between its two end positions.

In an even further embodiment switching means may be provided, for example integrated in the control unit, for switching on the timer in dependency of an activation or de-activation of the electrical coil. Other means or measures for setting the timer are also possible.

Further preferred embodiments are stated in the dependant claims.

The invention also relates to a method according to one of claims 7-13.

The invention shall be further clarified below with reference to the accompanying drawings in which:
Fig. 1 shows a sectional view of a first embodiment of a solenoid valve according to the invention having an inductive proximity sensor;
Fig. 2 shows a view according to fig. 1 of a second embodiment having a photonic sensor;
Fig. 3 shows a test result of the valve of fig. 1 in which the stroke versus time of the valve element movement and the voltage on the coil versus time are indicated; and
Fig. 4 shows the graph of fig. 3 in which also the velocity versus time is indicated.

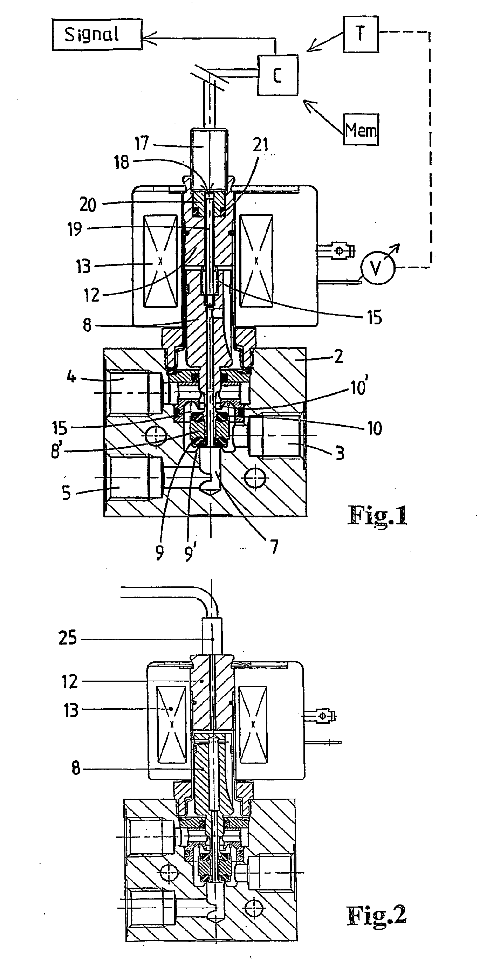

In figure 1 the entire solenoid valve has been indicated with the reference numeral 1. The valve 1 is of the balanced 3-way type and comprises a housing 2 with an inlet port 3 and two outlet ports 4, 5. The ports 3, 4, 5 connect to an axial bore 7 which is also provided in the housing 2. A valve element 8 is moveable up and down in the axial direction y of the bore 7. The valve element 8 comprises a head part 8' which is provided with sealing rings 9, 10 which can come to lie sealing against respective seats 9', 10' of the housing 2 depending on the position of the valve element 8. Above the valve element 8 a static core or so-called plugnut 12 is provided. This static core 12 is magnetisable by means of an electrical coil 13. A thus generated magnetic field is able to move the valve element 8 between a first end position (starting position), in which its sealing ring 9 lies sealing against its seat 9' (figure 1) and a second end position in which its sealing ring 10 lies sealing against its seat 10'. In this way either a flow connection between the inlet port 3 and outlet port 10 or a flow connection between the inlet port 3 and outlet port 9 can be obtained. Springs 15 are provided which serve the purpose of pushing the valve element 8 back towards its original starting position (first end position).

The valve 1 further comprises a position sensor which is here formed by an inductive proximity sensor 17. The sensor 17 is attached on top of the valve 1 partly inside and partly above the static core 12. The sensor 17 cooperates with a detection surface 18 which is provided on the outer end of a detection staff 19. The detection staff 19 is connected with the valve element 8 in such a way that it moves up and down along with it and runs freely moveable through an opening in the static core 12. The sensor 17 emits an electromagnetic field and looks for changes in the field brought about by the movement of the detection surface 18 together with a movement of the valve element 8. The resulting magnetic field is then obtained by a sensing coil.

A non-metal protector cap 20 is positioned between the electrical coil 13 and the inductive proximity sensor 17. The cap 20 is placed inside a widened upper part of the opening in the static core 12 through which opening the staff 19 extends. A sealing 21 is provided between the non-metal protector cap 20 and the opening in the static core 12. The non-metal protector cap 20 has the advantage that it makes the valve pressure resistant towards the side of the inductive proximity sensor 17. Further it protects the sensor 17 and at the same time it may form an adjustment for the sensor 17.

According to the invention a control unit C is provided. The control unit C comprises a timer T and a memory MEM. Further the control unit comprises software for receiving data form the sensor 17. The memory MEM is filled with a set of reference values which are indicative for a proper functioning of the valve. These reference values for example may be stroke, velocity and/or acceleration patterns obtained out of earlier performed failure and maintenance analyses.

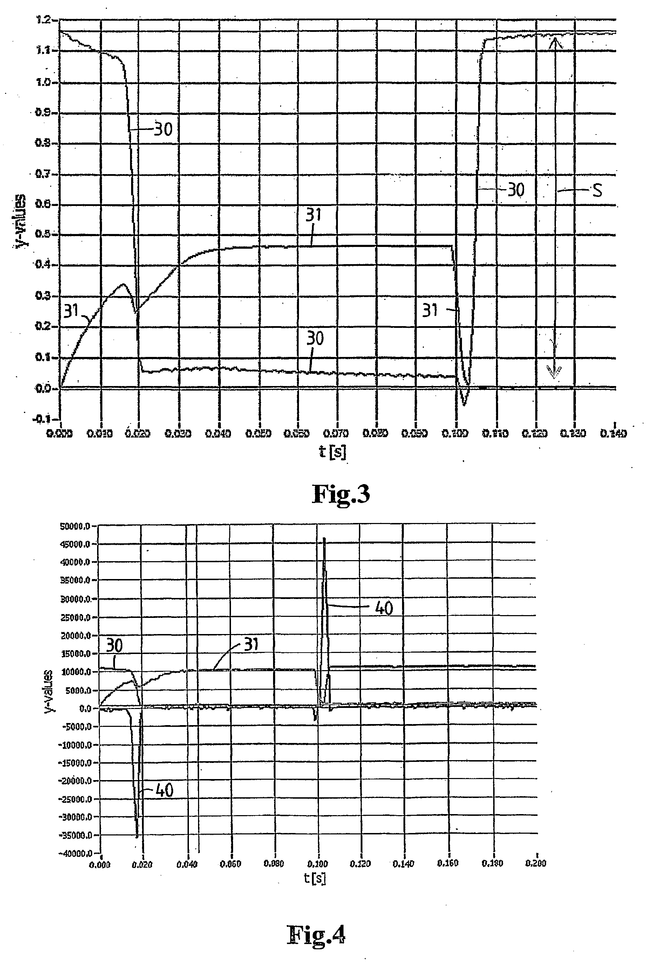

During a movement of the valve element 8, the timer T is switched on and the control unit C starts receiving position data of the moving valve element 8 via the sensor 17. An example of such a measurement of the detected stroke y which the valve element 8 has travelled starting from its first end position towards its second end position and back again, versus the time t passed during this travel is shown as line 30 in the graph of fig. 3. In this graph also the current 31 delivered to the electrical coil 13 is shown. Out of these measurement results it is possible to obtain the stroke S, velocity and acceleration pattern of the valve element 8 during its movement. For the velocity pattern as an example this is shown in fig. 4 (line 40). With this the velocity is obtained by differentiating the detected positions of the valve element 8 against the measured time t.

As can be seen in fig. 4, after the core starts moving, the velocity of the valve element 8 rapidly increases linear and then starts to decrease again also linear as soon as the valve element 8 starts reaching its opposite end position. The transition point between the increase and decrease of the velocity is sharp edged. As soon as the electrical coil 13 is switched off again, the valve element 8 starts moving in the opposite direction under the influence of the springs 15. Again the velocity rapidly increases linear and then decreases again also linear as soon as the valve element 8 starts reaching its original starting position.

The graph can be compared with a reference graph showing a normal properly operating valve. This makes it possible to easily and quickly spot differences there between which might be indicative of malfunction, failure, deterioration, (excessive) wear. For example, higher strokes in the graph might indicate to damaged O-rings, or to a higher medium pressure or temperature in the valve. A higher velocity indicates towards a damaged rider ring, whereas a lower velocity also might indicate towards such a damaged rider ring, but also to a damaged bore, damaged valve element, damaged sealing rings, damaged springs, damaged coil, the valve being blocked by pollution, etc. The graph even shows the impression and partial relaxation of the sealing rings when pressed against their seats.

The acceleration pattern can be obtained likewise out of the detected positions versus time by differentiating these results twice.

The timer T may advantageously be automatically switched on as soon as a voltage is delivered to the electrical coil 13.

Instead of using the inductive proximity sensor 17 it is also possible to use other types of position sensors, or velocity and/or acceleration sensors. For example fig. 2 shows an embodiment with a photonic sensor 25. The photonic sensor 25 emits light via transmitting fibres running through an opening in the static core 12 directly towards a top detection surface of the valve element 8. This surface reflects the light back into receiving fibres. The intensity of the reflected light is a measure for the position of the valve element 8.

Other types of possible sensors are a potentiometer, a strain gauge, an optical sensor with encoder, an ultrasonic sensor, a capacitive proximity sensor, an interferometer, a laser, or a linear variable differential transformer (LVDT).

The above described solenoid valve can be used as follows:
First calibration position detections are performed with the sensor 17 in order to obtain calibrated positions for the valve element 8 in both of its end positions. Then during use each time that a magnetic field is generated with the coil 13 and static core 12 for moving the valve element 8 from its first towards its second end position, a check of the health status and failure modus of the valve can be performed. With each movement the changing axial positions of the valve element 8 can be detected by the sensor 17 as a function in time and delivered to the control unit C. The control unit C determines stroke, velocity and/or acceleration patterns of the valve element during this movement cycle in time. The thus determined stroke, velocity and/or acceleration pattern is compared by the control unit C with the set of reference values in its memory MEM. In the case that the thus determined stroke, velocity and/or acceleration patterns are outside the set of reference values, a feedback signal is send out about failure modus and health status of the valve element 8 towards an operator. If such a feedback signal is received, then appropriate measures can be taken, like replacing the valve or performing maintenance thereto.

Besides the embodiments shown numerous variants are possible. For example the solenoid valve may also be used in combination with other sensors, like sensors for detecting temperature, pressure or flow. This may provide for an even more reliable prediction by the valve itself of its own failure effects. Instead of the shown 3-way valve the invention may also be used for other types of solenoid valves, for example with different numbers of ports, or with a rotational valve instead of a translational valve. The various parts of the valve, like the housing, the valve element, etc. may have other dimensions and/or other shapes and/or constructional details. Instead of a non-metal protector cap it is also possible to use a thin metal wall, which possibly can form part of the plugnut.

Thus owing to the invention a solenoid valve is obtained which is able to give a reliable feedback of failure modus and health status to an operator or the like. This feedback can give an external signal to a control room and bring the valve towards a higher safety level, because not only information is provided of the fact whether or not the valve is open or closed, but also information on whether or not the valve might soon start malfunctioning. This makes it possible to use the valve for a longer period of time as long as it keeps functioning properly. Early replacement in order to keep on the safe side is no longer necessary.

## Claims

1. Solenoid valve comprising:
- a housing (2) having an axial bore which is in flow connection with at least an inlet port (3) and an outlet port (4, 5);
- a valve element which is moveable to and fro in the axial direction of the bore (7);
- an electrical coil (13) for generating a magnetic field for moving the valve element (8) between a first end position, in which it lies sealing against a seat (9', 10') in order to disconnect said inlet and outlet port (3; 4, 5) from each other, and a second end position, in which it lies at a distance from said seat (9', 10') in order to create a flow opening for connecting said inlet and outlet port (3; 4, 5) with each other;
- a position sensor (17) for detecting axial positions of the valve element (8) in the axial direction of the bore (7); and
- a control unit (C) for determining stroke, velocities and/or accelerations of the valve element (8) in the axial direction of the bore (7) as a function of the detected axial positions during movements of the valve element (8) between its first and second end positions, **characterized in that** the control unit (C) comprises a memory (MEM) with a set of reference values which are indicative for a proper functioning of the valve, and wherein the control unit (C) is designed for comparing said determined stroke, velocities and/or accelerations as a function of the detected axial positions with the set of reference values, wherein
the set of reference values stored in the memory (MEM) comprises ranges for the stroke, velocities and/or accelerations, which ranges are indicative for a future malfunctioning of the valve, and
wherein means (SIGNAL) are provided for sending out a feedback signal about failure modus and health status towards an operator that the valve needs maintenance, in particular that an element of the valve is likely to get damaged soon and needs to be replaced, in the case that said determined stroke, velocities and/or accelerations as a function of the detected axial positions are outside said ranges for the stroke, velocities and/or accelerations of the set of reference values.

2. Solenoid valve according to claim 1, wherein the control unit (C) comprises a timer (T) for measuring time as a function of the detected axial positions of the valve element (8) during a movement starting at its first towards its second end position or vice versa, and wherein the control unit (C) is designed for obtaining said velocities and/or accelerations by differentiating the detected positions against the measured time.

3. Solenoid valve according to claim 2, wherein switching means are provided for switching on the timer (T) in dependency of an activation or de-activation of the electrical coil (13).

4. Solenoid valve according to one of the preceding claims, wherein the position sensor (17) is a proximity sensor, in particular an inductive proximity sensor.

5. Solenoid valve according to one of the preceding claims, wherein a non-metal protector cap (20) is positioned between the electrical coil (13) and the position sensor (17).

6. Solenoid valve according to one of the preceding claims, wherein the valve is a balanced 3-way solenoid valve.

7. Method for monitoring the functioning of a solenoid valve, comprising the steps of:
- generating a magnetic field for moving a valve element (8) in an axial direction of a bore (7) between first and second end positions;
- detecting axial positions of the valve element (8) in the axial direction of the borne (7); and
- determining stroke, velocities and/or accelerations of the valve element (8) in the axial direction of the bore (7) as a function of the detected axial positions during movements of the valve element (8) between its first and second end positions, **characterized in that**
said determined stroke, velocities and/or accelerations as a function of the detected axial positions are compared with a set of reference values which are indicative for a proper functioning of the valve, wherein
the set of reference values comprises ranges for the stroke, velocities and/or accelerations, which ranges are indicative for a future malfunctioning of the valve, and
wherein a feedback signal is send out about failure modus and health status towards an operator that the valve needs maintenance, in particular that an element of the valve is likely ; to get damaged soon and needs to be replaced, in the case that said determined stroke, velocities and/or accelerations as a function of the detected axial positions are outside said ranges for the stroke, velocities and/or accelerations of the set of reference values.

8. Method according to claim 7, wherein a total maximum stroke of the valve element (8) in the axial direction of the bore (7) is determined during movement from its first towards its second end position or vice versa,
wherein this determined maximum stroke is compared with a reference maximum stroke value indicative for a proper functioning of the valve, and
wherein if the determined maximum stroke is higher than the reference maximum stroke value, said feedback signal is sent out which indicates the operator that the valve needs maintenance, in particular that an element of the valve is likely to get damaged soon and needs to be replaced.

9. Method according to claim 7 or 8, wherein a maximum and/or minimum velocity and/or acceleration of the valve element (8) in the axial direction of the bore (7) is determined during movement of the valve element (8) between its first and second end positions,
wherein this determined maximum and/or minimum velocity and/or acceleration is/are compared with a reference maximum and/or minimum velocity and/or acceleration value indicative for a proper functioning of the valve, and
wherein if the determined maximum and/or minimum velocity and/or acceleration is/are higher and/or lower than the reference maximum and/or minimum velocity and/or acceleration value respectively, said feedback signal is sent out which indicates the operator that a friction of the valve element in its axial bore at least locally is too high and/or low and that the valve needs maintenance, in particular that an element of the valve is likely to get damaged soon and needs to be replaced.

10. Method according to one of claims 7-9, wherein a calibration position detection is performed in order to obtain a calibrated starting position for the valve element (8) in at least one of its end positions.

11. Method according to one of claims 7-10, wherein time is measured as a function of the detected axial positions of the valve element (8) during a movement starting at its first towards its second end position or vice versa, and wherein said velocities and/or accelerations are obtained by differentiating the detected positions against the measured time.

12. Method according to claim 11, wherein the measuring of time is started in dependency of an activation or de-activation of the electrical coil (13).

13. Method according to one of claims 7-12, wherein, preceding determining of the stroke, velocities and/or accelerations of the valve element during a monitoring of the functioning of the solenoid valve, the valve has been measured individually in a factory in order to determine its own characteristic behaviour conditions and then determine the corresponding set of reference values to fill up the memory of that particular valve with.

## Patentansprüche

1. Magnetventil umfassend:
- ein Gehäuse (2) mit einer axialen Bohrung (7), welche in Strömungsbeziehung mit zumindest einer Einlassöffnung (3) und einer Auslassöffnung (4, 5) ist;
- ein Ventilelement (8), welches in der axialen Richtung der Bohrung (7) hin und her beweglich ist;
- eine elektrische Spule (13) zum Erzeugen eines Magnetfeldes zum Bewegen des Ventilelements (8) zwischen einer ersten Endposition, in welcher es gegen einen Sitz (9', 10') dichtend liegt, um die Einlass- und Auslassöffnung (3; 4, 5) voneinander zu trennen, und einer zweiten Endposition, in welcher es in einem Abstand von dem Sitz (9', 10') liegt, um eine Durchflussöffnung zum Verbinden der Einlass- und Auslassöffnung (3; 4, 5) zu schaffen;
- ein Positionssensor (17) zum Erfassen axialer Positionen des Ventilelements (8) in der axialen Richtung der Bohrung (7); und
- eine Steuereinheit (C) zum Bestimmen von Hub, Geschwindigkeiten und/oder Beschleunigungen des Ventilelements (8) in der axialen Richtung der Bohrung (7) als eine Funktion der bei Bewegungen des Ventilelements (8) zwischen seiner ersten und zweiten Endpositionen erfassten axialen Positionen,
**dadurch gekennzeichnet, dass**
die Steuereinheit (C) einen Speicher (MEM) mit einer Menge von Referenzwerten umfasst, welche für eine einwandfreie Funktion des Ventils indikativ sind, und wobei die Steuereinheit (C) dazu eingerichtet ist, den bestimmten Hub, die bestimmten Geschwindigkeiten und/oder Beschleunigungen als eine Funktion der erfassten axialen Positionen mit der Menge der Referenzwerte zu vergleichen, wobei die Menge der in dem Speicher (MEM) gespeicherten Referenzwerte Bereiche für den Hub, die Geschwindigkeiten und/oder Beschleunigungen umfasst, wobei die Bereiche für eine zukünftige Fehlfunktion des Ventils indikativ sind, und wobei Mittel (SIGNAL) zum Versenden eines Rückmeldungssignals über Fehlermodus und Gerätezustand an einen Betreiber bereitgestellt sind, dass das Ventil Wartung erfordert, insbesondere dass ein Element des Ventils voraussichtlich bald beschädigt werden wird und auszutauschen ist, falls der erfasste Hub, die erfassten Geschwindigkeiten und/oder Beschleunigungen als eine Funktion der erfassten axialen Positionen außerhalb der Bereiche für den Hub, die Geschwindigkeiten und/oder Beschleunigungen aus der Menge der Referenzwerte sind.

2. Magnetventil gemäß Anspruch 1, wobei die Steuereinheit (C) einen Zeitmesser (T) zum Messen von Zeit als eine Funktion der erfassten axialen Positionen des Ventilelements (8) bei einer Bewegung umfasst, welche beginnend an seiner ersten hin zu seiner zweiten Endposition verläuft oder umgekehrt, und wobei die Steuereinheit (C) dazu eingerichtet ist, die Geschwindigkeiten und/oder Beschleunigungen durch Differenzieren der erfassten Positionen nach der gemessenen Zeit zu erhalten.

3. Magnetventil gemäß Anspruch 2, wobei Schaltmittel zum Einschalten des Zeitmessers (T) in Abhängigkeit von einer Aktivierung oder Deaktivierung der elektrischen Spule (13) bereitgestellt sind.

4. Magnetventil gemäß einem der vorhergehenden Ansprüche, wobei der Positionssensor (17) ein Näherungssensor, insbesondere ein induktiver Näherungssensor ist.

5. Magnetventil gemäß einem der vorhergehenden Ansprüche, wobei eine nicht-metallische Schutzkappe (20) zwischen der elektrischen Spule (13) und dem Positionssensor (17) positioniert ist.

6. Magnetventil gemäß einem der vorhergehenden Ansprüche, wobei das Ventil ein druckentlastetes Drei-Wege-Magnetventil ist.

7. Verfahren zum Funktionsüberwachen eines Magnetventils, umfassend die Schritte:
- Erzeugen eines Magnetfelds zum Bewegen eines Ventilelements (8) in einer axialen Richtung einer Bohrung (7) zwischen ersten und zweiten Endpositionen;
- Erfassen axialer Positionen des Ventilelements (8) in der axialen Richtung der Bohrung (7); und
- Bestimmen von Hub, Geschwindigkeiten und/oder Beschleunigungen des Ventilelements (8) in der axialen Richtung der Bohrung (7) als eine Funktion der erfassten axialen Positionen bei Bewegungen des Ventilelements (8) zwischen seinen ersten und zweiten Endpositionen,
**dadurch gekennzeichnet, dass**
der bestimmte Hub, die bestimmten Geschwindigkeiten und/oder Beschleunigungen als eine Funktion der erfassten axialen Positionen mit einer Menge von Referenzwerten verglichen werden, welche für eine einwandfreie Funktion des Ventils indikativ sind,
wobei die Menge von Referenzwerten Bereiche für den Hub, die Geschwindigkeiten und/oder Beschleunigungen umfasst, wobei die Bereiche für eine zukünftige Fehlfunktion des Ventils indikativ sind, und
wobei ein Rückmeldungssignal über Fehlermodus und Gerätezustand an einen Betreiber versandt wird, dass das Ventil Wartung erfordert, insbesondere dass ein Element des Ventils voraussichtlich bald beschädigt werden wird und ersetzt werden muss, falls der bestimmte Hub, die Geschwindigkeiten und/oder Beschleunigungen als eine Funktion der erfassten axialen Positionen außerhalb der Bereiche für den Hub, die Geschwindigkeiten und/oder Beschleunigungen aus der Menge der Referenzwerte sind.

8. Verfahren gemäß Anspruch 7, wobei ein gesamter Maximalhub des Ventilelements (8) in der axialen Richtung der Bohrung (7) bei einer Bewegung von seiner ersten zu seiner zweiten Endposition hin oder umgekehrt bestimmt wird,
wobei dieser bestimmte Maximalhub mit einem Referenzmaximalhubwert verglichen wird, welcher für ein einwandfreies Funktionieren des Ventils indikativ ist, und
wobei, falls der bestimmte Maximalhub höher als der Referenzmaximalhubwert ist, das Rückmeldungssignal versandt wird, welches dem Betreiber anzeigt, dass das Ventil Wartung erfordert, insbesondere dass ein Element des Ventils voraussichtlich bald beschädigt werden wird und zu ersetzen ist.

9. Verfahren gemäß Anspruch 7 oder 8, wobei eine maximale und/oder minimale Geschwindigkeit und/oder Beschleunigung des Ventilelements (8) in der axialen Richtung der Bohrung (7) bei einer Bewegung des Ventilelements (8) zwischen seinen ersten und zweiten Endpositionen bestimmt wird,
wobei diese bestimmte maximale und/oder minimale Geschwindigkeit und/oder Beschleunigung mit einem für ein einwandfreies Funktionieren des Ventils indikativen Referenzmaximal- und/oder -minimalgeschwindigkeits- und/oder -beschleunigungswert verglichen wird/werden, und
wobei, falls die bestimmte Maximal- und/oder Minimalgeschwindigkeit und/oder -beschleunigung höher und/oder niedriger ist/sind als der Referenzmaximal- und/oder -minimalgeschwindigkeits- und/oder -beschleunigungswert, das Rückmeldungssignal versandt wird, welches dem Betreiber anzeigt, dass eine Reibung des Ventilelements in seiner axialen Bohrung zumindest lokal zu hoch und/oder zu niedrig ist und dass das Ventil Wartung erfordert, insbesondere dass ein Element des Ventils voraussichtlich bald beschädigt werden wird und zu ersetzen ist.

10. Verfahren gemäß einem der Ansprüche 7-9, wobei eine Kalibrierungspositionserfassung durchgeführt wird, um eine kalibrierte Startposition für das Ventilelement (8) an zumindest einer seiner Endpositionen zu erhalten.

11. Verfahren gemäß einem der Ansprüche 7-10, wobei Zeit als eine Funktion der erfassten axialen Positionen des Ventilelements (8) bei einer an seiner ersten hin zu seiner zweiten Endposition startenden oder umgekehrten Bewegung gemessen wird, und wobei die Geschwindigkeiten und/oder Beschleunigungen durch Differenzieren der erfassten Positionen nach der gemessenen Zeit erhalten werden.

12. Verfahren gemäß Anspruch 11, wobei das Messen von Zeit in Abhängigkeit einer Aktivierung oder Deaktivierung der elektrischen Spule (13) gestartet wird.

13. Verfahren gemäß einem der Ansprüche 7-12, wobei dem Bestimmen von Hub, Geschwindigkeiten und/oder Beschleunigungen des Ventilelements während einer Funktionsüberwachung des Magnetventils vorausgehend das Ventil in einer Fertigung individuell vermessen wurde, um dessen eigene charakteristische Verhaltensbedingungen zu bestimmen und dann die entsprechende Menge von Referenzwerten zu bestimmen, um damit den Speicher dieses bestimmten Ventils zu befüllen.

## Revendications

1. Electrovanne comprenant :
- un logement (2) comportant un alésage axial (7) qui est en liaison fluidique avec au moins un orifice d'entrée (3) et un orifice de sortie (4, 5) ;
- un élément de vanne (8) qui peut être déplacé en va-et-vient dans la direction axiale de l'alésage (7) ;
- une bobine électrique (13) pour générer un champ magnétique pour déplacer l'élément de vanne (8) entre une première position d'extrémité, à laquelle il repose de manière étanche contre un siège (9', 10') afin de déconnecter lesdits orifices d'entrée et de sortie (3 ; 4, 5) l'un de l'autre, et une deuxième position d'extrémité, à laquelle il se trouve à distance dudit siège (9', 10') afin de créer une ouverture d'écoulement pour relier lesdits orifices d'entrée et de sortie (3 ; 4, 5) l'un à l'autre ;
- un capteur de position (17) pour détecter les positions axiales de l'élément de vanne (8) dans la direction axiale de l'alésage (7) ; et
- une unité de commande (C) pour déterminer une course, des vitesses et/ou des accélérations de l'élément de vanne (8) dans la direction axiale de l'alésage (7) en fonction des positions axiales détectées pendant les déplacements de l'élément de vanne (8) entre ses première et deuxième positions d'extrémité,
**caractérisée en ce que**
l'unité de commande (C) comprend une mémoire (MEM) avec un ensemble de valeurs de référence qui sont indicatives d'un fonctionnement correct de la vanne, et dans laquelle l'unité de commande (C) est conçue pour comparer lesdites course, vitesses et/ou accélérations déterminées en fonction des positions axiales détectées avec l'ensemble de valeurs de référence, dans laquelle
l'ensemble de valeurs de référence mémorisées dans la mémoire (MEM) comprend des plages pour la course, les vitesses et/ou les accélérations, lesquelles plages sont indicatives d'un dysfonctionnement futur de la vanne, et
dans laquelle des moyens (SIGNAL) sont prévus pour délivrer un signal de rétroaction concernant un mode de défaillance et un état de santé à un opérateur indiquant que la vanne nécessite une maintenance, en particulier qu'un élément de la vanne est susceptible d'être bientôt endommagé et doit être remplacé, dans le cas où lesdites course, vitesses et/ou accélérations déterminées en fonction des positions axiales détectées sont en-dehors desdites plages pour la course, les vitesses et/ou les accélérations de l'ensemble de valeurs de référence.

2. Electrovanne selon la revendication 1, dans laquelle l'unité de commande (C) comprend un registre d'horloge (T) pour mesurer le temps en fonction des positions axiales détectées de l'élément de vanne (8) pendant un déplacement commençant à sa première position d'extrémité vers sa deuxième position d'extrémité ou vice versa, et dans laquelle l'unité de commande (C) est conçue pour obtenir lesdites vitesses et/ou accélérations en différenciant les positions détectées par rapport au temps mesuré.

3. Electrovanne selon la revendication 2, dans laquelle des moyens de commutation sont prévus pour activer le registre d'horloge (T) conformément à une activation ou une désactivation de la bobine électrique (13).

4. Electrovanne selon l'une quelconque des revendications précédentes, dans laquelle le capteur de position (17) est un capteur de proximité, en particulier un capteur de proximité inductif.

5. Electrovanne selon l'une quelconque des revendications précédentes, dans laquelle un capuchon de protection non métallique (20) est positionné entre la bobine électrique (13) et le capteur de position (17).

6. Electrovanne selon l'une quelconque des revendications précédentes, dans laquelle la vanne est une électrovanne à trois voies équilibrée.

7. Procédé pour surveiller le fonctionnement d'une électrovanne, comprenant les étapes :
- de génération d'un champ magnétique pour déplacer un élément de vanne (8) dans une direction axiale d'un alésage (7) entre des première et deuxième positions d'extrémité ;
- de détection des positions axiales de l'élément de vanne (8) dans la direction axiale de l'alésage (7) ; et
- de détermination de la course, des vitesses et/ou des accélérations de l'élément de vanne (8) dans la direction axiale de l'alésage (7) en fonction des positions axiales détectées pendant les déplacements de l'élément de vanne (8) entre ses première et deuxième positions d'extrémité,
**caractérisé en ce que**
lesdites course, vitesses et/ou accélérations déterminées en fonction des positions axiales détectées sont comparées à un ensemble de valeurs de référence qui sont indicatives d'un fonctionnement correct de la vanne, dans lequel
l'ensemble de valeurs de référence, comprend des plages pour la course, les vitesses et/ou les accélérations, lesquelles plages sont indicatives d'un dysfonctionnement futur de la vanne, et
dans lequel un signal de rétroaction est délivré concernant un mode de défaillance et un état de santé à un opérateur indiquant que la vanne nécessite une maintenance, en particulier qu'un élément de la vanne est susceptible d'être bientôt endommagé et doit être remplacé, dans le cas où lesdites course, vitesses et/ou accélérations déterminées en fonction des positions axiales détectées sont en-dehors desdites plages pour la course, les vitesses et/ou les accélérations de l'ensemble de valeurs de référence.

8. Procédé selon la revendication 7, dans lequel une course maximum totale de l'élément de vanne (8) dans la direction axiale de l'alésage (7) est déterminée pendant un déplacement de sa première position d'extrémité vers sa deuxième position d'extrémité ou vice versa,
dans lequel cette course maximum déterminée est comparée à une valeur de course maximum de référence indicative d'un fonctionnement correct de la vanne, et
dans lequel, si la course maximum déterminée est supérieure à la valeur de course maximum de référence, ledit signal de rétroaction est sorti, lequel indique à l'opérateur que la vanne nécessite une maintenance, en particulier qu'un élément de la vanne est susceptible d'être bientôt endommagé et doit être remplacée.

9. Procédé selon la revendication 7 ou 8, dans lequel des vitesses et/ou accélérations maximums et/ou minimums de l'élément de vanne (8) dans la direction axiale de l'alésage (7) sont déterminées pendant un déplacement de l'élément de vanne (8) entre ses première et deuxième positions d'extrémité,
dans lequel ces vitesses et/ou accélérations maximums et/ou minimums déterminées sont comparées à des valeurs de vitesses et/ou d'accélérations maximums et/ou minimums de référence indicatives d'un fonctionnement correct de la vanne, et
dans lequel, si les vitesses et/ou accélérations maximums et/ou minimums déterminées sont supérieures et/ou inférieures aux valeurs de vitesses et/ou d'accélérations maximums et/ou minimums de référence, respectivement, ledit signal de rétroaction est délivré, lequel indique à l'opérateur qu'un frottement de l'élément de vanne dans son alésage axial au moins localement est trop élevé et/ou trop faible et que la vanne nécessite une maintenance, en particulier qu'un élément de la vanne est susceptible d'être bientôt endommagé et doit être remplacé.

10. Procédé selon l'une des revendications 7 à 9, dans lequel une détection de position d'étalonnage est effectuée afin d'obtenir une position de début étalonnée pour l'élément de vanne (8) à au moins l'une de ses positions d'extrémité.

11. Procédé selon l'une des revendications 7 à 10, dans lequel le temps est mesuré en fonction des positions axiales détectées de l'élément de vanne (8) pendant un déplacement commençant à sa première position d'extrémité vers sa deuxième position d'extrémité ou vice versa, et dans lequel lesdites vitesses et/ou accélérations sont obtenues en différenciant les positions détectées par rapport au temps mesuré.

12. Procédé selon la revendication 11, dans lequel la mesure du temps est débutée en fonction d'une activation ou d'une désactivation de la bobine électrique (13).

13. Procédé selon l'une des revendications 7 à 12, dans lequel avant la détermination de la course, des vitesses et/ou des accélérations de l'élément de vanne pendant une surveillance du fonctionnement de l'électrovanne, les vannes ont été mesurées individuellement en usine afin de déterminer leurs propres conditions de comportement caractéristiques et de déterminer ensuite l'ensemble correspondant de valeurs de référence pour remplir la mémoire d'une vanne particulière avec celui-ci.
